Europäisches Patentamt

European Patent Office

Office européen des brevets

(11) Publication number: **0 429 194 A2**

# EUROPEAN PATENT APPLICATION

(21) Application number: **90311840.4**

(22) Date of filing: **29.10.90**

(51) Int. Cl.⁵: **G11B 33/14, G11B 25/04, G11B 17/038**

(30) Priority: **13.11.89 US 434648**

(43) Date of publication of application:
**29.05.91 Bulletin 91/22**

(84) Designated Contracting States:
**DE FR GB IT**

(71) Applicant: **Hewlett-Packard Company**
**Mail Stop 20 B-O, 3000 Hanover Street**
**Palo Alto, California 94304(US)**

(72) Inventor: **Pyke, Neil R.**
**443 Hearthstone**
**Boise, Idaho 83702(US)**

(74) Representative: **Colgan, Stephen James et al**
**CARPMAELS & RANSFORD 43 Bloomsbury**
**Square**
**London WC1A 2RA(GB)**

(54) **A mechanically compliant mount in a disk stack assembly.**

(57) A disk stack assembly (21) in which a compliant interface (25) is provided between the disk stack (21) and the rotary mount (13) therefor, to accommodate limited radial displacement without slippage between mating parts of the interface, for the purpose of accommodating dimensional changes resulting from temperature differences and or differing thermal coefficients of expansion among the parts of the disk stack assembly (21), during periods of thermal cycling in the thermal environment of the disk drive.

FIG. 1

EP 0 429 194 A2

## A MECHANICALLY COMPLIANT MOUNT IN A DISK STACK ASSEMBLY

### Technical Field

This invention relates generally to disk stack assemblies in disk memory drives in which permanent thermally induced relative displacements among the parts of the disk stack assembly are avoided.

### Background of the Invention

A significant problem in the design of a disk drive is how to deal with the broad temperature range in the thermal environment to which the disk drive may be exposed. Each part will expand or contract, depending upon the temperature swing experienced and on each materials, thermal coefficient of expansion. Great care must be taken where different materials are in contact. What may happen after one or more thermal cycles is that one of the parts will expand significantly more than the other and a slight slip will occur at the joint between the two parts. When returned to the original temperature, the parts will remain slightly displaced relative to their original positions.

Such relative displacements are especially troublesome when the parts involved are in the disk stack assembly. In some disk drives the disk hub is made of steel and is actually a part of the motor rotor which drives the disk stack. The disk stack which is of aluminum is mounted on this steel hub. The thermal coefficients of expansion are different and in thermal cycling over the life of the disk drive, permanent relative displacement between the steel and the aluminum parts may occur. Any relative displacement, called disk slip, results in a once around error in the track position. This once around error causes the servo to work harder in seeking or in following an eccentric track, for example, than it would otherwise have to work without the disk slip.

The thermal mismatch in the materials for the situation dealt with here is between the aluminum disk and the disk spindle hub. Aluminum disks are commonly used in disk drives. Other parts of the drive structure may be made of steel to match the thermal coefficients of expansion among such parts and to obtain low thermal coefficients of expansion, the former to minimize or eliminate slippage at joints and the latter to minimize dimensional changes in changing thermal environments.

When an aluminum disk stack assembly must be joined to a steel hub rotatably mounted on a spindle in a disk drive, slippage at steel/aluminum interfaces occurs which can cause track-to-track eccentricities in track cylinders, track-to-disk axis eccentricities, and track-to-head displacements, any of which degrade the integrity of data which is being read.

Where the disk spindle hub is a steel cylinder forming part of the rotor of a motor driving the disk stack, it is not unusual for the aluminum disk stack to be mounted directly on the steel cylinder. However, it is usually a lower performance disk drive which is so configured in which thermally induced dimensional changes are of lesser significance. Higher performance disk drives, with high track pitch and short seek times, are usually much more sensitive to the occurrence of physical displacements due to disk slip.

One solution to this problem is to attach the bottom disk to the spindle hub with an adhesive. Use of adhesives in a clean environment is a difficult manufacturing problem which is best avoided.

Many spindle designs call for an aluminum ring to be bonded to the spindle hub. A thin ring is sometimes added to provide an easily machined surface for the final trueing of the assembled spindle. This use of an aluminum ring doesn't address disk slip, however. A thick aluminum ring has been used to provide an easily machined surface and to deal with potential disk slip, a thick aluminum ring is not compliant and does not solve the problem of disk slip.

Still another approach to joining an aluminum disk stack to a steel spindle hub is to shrink, or press, an aluminum sleeve over the steel hub. Here the interface of dissimilar materials is between the steel hub and the aluminum sleeve. The contact force due to the shrink or press fit is large enough that no slip occurs. In this arrangement minimum axial contact between the steel and aluminum cylinders is preferred because of the divergent thermal coefficients of expansion. This is a difficult assembly process.

### Disclosure of the Invention

Improvements with respect to prior art arrangements, such as those discussed above, are realized in a disk stack assembly involving dissimilar materials, according to this invention, in which a compliant interface structure is provided at the junction between the dissimilar materials. Where the disk stack is clamped in a position between the ends of the steel spindle hub, which is free to rotate, the compliant interface comprises a ring of material such as aluminum. The compliant ring is disposed between a bearing surface, such as an end flange on the steel cylindrical hub and a surface of a disk on one end of the disk stack. The aluminum ring has a cross sectional configuration affording radial compliance such that the bearing faces of the ring may move relative to one another without slippage at the flange or at the disk face. Thus, the disk stack, of a material such as aluminum, having a thermal coefficient of expansion greater than that of the steel cylindrical hub, may radially expand and contract relative to the hub, during environmental thermal cycling, without interface slippage, which would cause permanent displacement. Disk eccentricity relative to the axis of rotation is thereby avoided.

Brief Description of the Drawings

Fig. 1 is a cross-sectional view, in a plane including the axis of rotation, of a disk stack assembly which embodies the principles of this invention: and
Figs. 2 and 3 are fragmentary sectional views, showing modifications of the structure of Fig. 1.

Best Mode for Carrying out the Invention

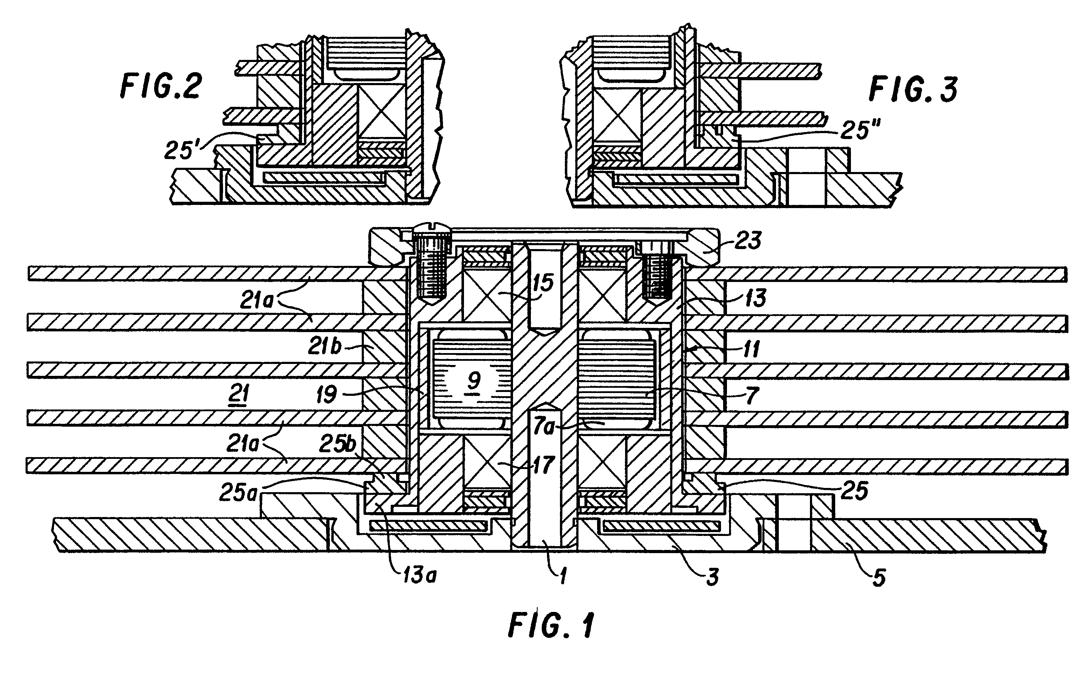

A disk stack assembly embodying the principles of this invention is illustrated in the cross-sectional view of a disk stack assembly as seen in Fig. 1. The disk stack assembly is supported by a spindle shaft 1 secured in a spindle mounting flange 3, in turn secured to a base 5, forming part of the main frame of a disk drive. The spindle shaft 1 mounts the stator 7, having windings 8, of a motor generally designated 9, additionally comprising a rotor 11. The rotor 11 comprises a steel cylindrical hub 13, journalled by bearings 15 and 17 on opposite ends of the stator 7, on the spindle shaft 1, to rotate about the spindle axis. The steel cylindrical hub 13 mounts a permanent magnet cylinder 19 in a concentric position about the stator 7. Windings 7a of the motor 9 on the stator 7 are supplied with power by conductors (not shown) through the lower hollow section of the spindle shaft 1.

The steel cylindrical hub 13 of the motor rotor 11 is provided with a bottom radially outwardly extending flange 13a. A disk stack 21 comprises a plurality of axially spaced disks 21a, separated by spacers 21b. These spacers 21b and disks 21a are usually made of aluminum which has a thermal coefficient of expansion which is greater than that of the steel cylindrical hub 13. This disk stack has a central circular concentric opening of a diameter sufficient to provide clearance between the steel cylindrical hub 13 and the disk stack 21. The disk stack is located concentric to the spindle's axis of rotation and is securely clamped between the bottom flange 13a of the steel cylindrical hub 13 and a ring clamp 23 of aluminum at the upper end of the steel cylindrical hub 13.

A compliant ring 25 of a material such as aluminum, is disposed between the flange 13a and the bottom surface of the bottom disk 21a of the disk stack. This compliant ring 25 has a T-shaped cross section and is disposed with the cross arm of the T, as the base 25a of the compliant ring 25, against the flange 13a, and the leg 25b of the T projecting upwardly, parallel to the axis of the spindle shaft 1. The axial leg 25b is of a cross section having a radial dimension and an axial dimension to provide long column stability to avoid buckling and yet within the elastic limits of the material of which it is fabricated, such as aluminum, to permit radial displacement of the upper end of the axial leg 25b with respect to its lower end, in the presence of thermal cycling in the disk drive environment, to accommodate radial displacement of the disk stack with respect to the steel cylindrical member 13 at the flange 13a, without slippage at the engaged surface and without exceeding the elastic limit of the material of the compliant ring 25, which would cause plastic deformation.

Fig. 2 illustrates an alternative embodiment of this invention in which a compliant ring 25' is of L-shaped cross sectional configuration. Otherwise the considerations discussed above with respect to the compliant ring 25 of T-shaped cross sectional configuration, apply equally here.

In Fig. 3, a further variation of the compliant ring is shown. The compliant ring 25" in Fig. 3, comprises two axial legs dimensioned to provide stability in compression, yet individually of more flexibility in the radial direction than those of the Fig. 1 and Fig. 2.

While the axial sections of these compliant rings are described as legs, it is to be appreciated that the bases and legs seen in cross section are in fact sectional parts of a compliant ring, but were treated as described to permit an elementary analysis of the section function.

It is to be understood that the materials named in describing this invention, while representing those in a disk drive in which the illustrated disk stack assembly represents the best mode presently known to the applicants for practicing this invention, are purely illustrative. The invention may be practiced with other materials having different thermal coefficients of expansion.

Industrial Applicability

The compliant interface of the invention is useful in general in disk drives for joining the parts of disk stack assemblies where materials having different thermal coefficients of expansion are employed.

**Claims**

1. In a disk drive, a disk stack assembly (21), comprising:

rotatable support means (13) having an axis of rotation;

a cylindrical member (11) on said rotatable support means (13) with its axis coincident with said axis of rotation;

an outwardly extending flange (13a) adjacent one end of said cylindrical member (13);

a plurality of disks (21a) having central circular openings concentrically disposed about said cylindrical member (13) in axially spaced positions;

spacer rings (21b), having substantially the same inner diameter of said circular openings, disposed between said disks (21a);

a compliant ring (25) having a circular base seated on said flange (13a) and an axially extending ring section projecting from said base and having a lesser radial cross sectional dimension than said base;

the extremity of said axially extending ring section engaging the surface of a disk (21a) at one end of said disk stack assembly (21);

clamp means (23) at the other end of said disk stack assembly (21), engaging said cylindrical member (13) and the surface of a disk (21a) at said other end of said disk stack assembly (21) for compressing said disk stack (21) between said clamp mean (23) and said extremity of said axially extending ring section of said compliant ring (25);

said axially extending ring section providing limited radial deflection without slippage at said extremity in contact with said disk (21a), to permit relative movement between said disk (21a) and said flange (13a).

2. The invention according to Claim 1, in which: said compliant ring (25) has a T-shaped cross section.

3. The invention according to Claim 1, in which: said compliant ring (25) has an L-shaped cross section.

4. The invention according to Claim 1, in which: said compliant ring (25) comprises two axially extending concentric ring section projections projecting from said base (5).

5. The invention according to Claim 1, in which: the material of said cylindrical member (13) has a thermal coefficient of expansion which is different from that of said compliant ring (25) and said disk stack assembly (21).

6. The invention according to Claim 5, in which: said cylindrical member (13) is of steel and said compliant ring (25) and said disk stack assembly (21) are of aluminum.

FIG.2

FIG.3

25'

25"

23

21a

15

13

21b

11

21

9

19

7

7a

21a

25b

17

25a

13a

1

25

3

5

FIG. 1

EP 0 429 194 A2